# EUROPÄISCHE PATENTSCHRIFT

(11) **EP 1 660 244 B1**
(45) Veröffentlichungstag und Bekanntmachung des Hinweises auf die Patenterteilung: **20.12.2006**
(21) Anmeldenummer: 04763585.9
(22) Anmeldetag: 29.07.2004
(51) Int. Cl.: B06B 1/18

(54) **SCHALLGENERATOR ZUR ERZEUGUNG AUSBREITUNGSFAEHIGER SCHALLIMPULSE IN ROHRLEITUNGEN EINES WASSER- ODER GASVERSORGUNGSSYSTEMS**
SONIC GENERATOR FOR GENERATING SONIC PULSES THAT CAN PROPAGATE ALONG PIPELINES OF A WATER OR GAS SUPPLY SYSTEM
GENERATEUR DE SONS SERVANT A PRODUIRE DES IMPULSIONS ACOUSTIQUES POUVANT SE PROPAGER DANS DES CANALISATIONS D'UN SYSTEME DE DISTRIBUTION D'EAU OU DE GAZ

(30) Priorität: 05.09.2003 DE 10341477
(43) Veröffentlichungstag der Anmeldung: 31.05.2006
(73) Patentinhaber: Riehle, Rainer, 74243 Langenbrettach (DE)
(72) Erfinder: Riehle, Rainer, 74243 Langenbrettach (DE)
(74) Vertreter: Lutz, Johannes Dieter
(86) Internationale Anmeldenummer: PCT/EP2004/008479
(87) Internationale Veröffentlichungsnummer: WO 2005/028126

(56) Entgegenhaltungen:
- WO-A-20/04009255
- DE-A- 19 813 852
- US-A- 2 351 163
- US-A- 4 003 203
- US-A- 4 359 962
- US-A- 5 005 511

## Beschreibung

Die Erfindung betrifft einen Schallgenerator zur Erzeugung in Rohrleitungen eines unter einem Systemdruck stehenden Wasser- oder Gasversorgungssystem ausbreitungsfähiger Schallimpulse, durch deren Nachweis und geeignete Auswertung der Verlauf der Rohrleitungen ermittelbar ist, und mit den weiteren, im Oberbegriff des Patentanspruchs 1 genannten, gattungsbestimmenden Merkmalen.

Schallgeneratoren dieser Art werden insbesondere zur Ortung von Kunststoffrohren eines Wasserversorgungsnetzes verwendet, die, weil sie elektrisch nicht leitend sind, mit klassischen elektromagnetischen Methoden nicht geortet werden können. Bei einem bekannten Schallgenerator der eingangs genannten Art ist zur Schallerzeugung ein in der Art eines doppelt wirkenden hydraulischen Zylinders, ausgebildeter Anschlagzylinder vorgesehen, bei dem in einer Gehäusebohrung ein axial beweglicher Schwimmkolben angeordnet ist, der innerhalb des Gehäuses zwei alternativ mit Druck beaufschlagbare und entlastbare Druckräume gegeneinander abgrenzt, sodaß er bei geeigneter Ansteuerung zwischen anschlag-markierten Endpositionen hin- und her-bewegbar ist. Zur diesbezüglichen Ansteuerung ist ein elektromagnetisch gesteuertes 4/2-Wege-Ventil vorgesehen, das eine federzentrierte Grundstellung hat, in der einer der beiden Druckräume mit dem Systemdruck des Versorgungssystems beaufschlagt und der andere Druckraum druckentlastet ist, und in dessen bei Erregung eines Steuermagneten eingenommener, hierzu alternativer Funktionsstellung der andere Druckraum unter dem Systemdruck steht und nunmehr der in der Grundstellung des Ventils druckbeaufschlagte Druckraum druckentlastet ist. Die Erzeugung von für die Ortung der Rohrleitungen nutzbarer Schallimpulse kommt dadurch zustande, dass der während der Kolbenverschiebungen fließende, aus dem Netz in den Anschlagzylinder eingeleitete Wasserstrom abrupt gestoppt wird, wenn der Kolben die jeweilige Anschlagposition erreicht. Der bekannte Schallgenerator ist im Falle seines überwiegenden Einsatzes zur Ortung von Wasserleitungsrohren mit zumindest den folgenden Nachteilen behaftet.

Die direkte elektromagnetische Ansteuerung des Steuerventils erfordert einen leistungsstarken Magneten, da der Ventilkolben gegen anstehenden Wasserdruck verschiebbar sein muß. Dies bedingt einen relativ hohen Verbrauch an elektrischer Energie. Um mit dem bekannten Schallgenerator einen Tag lang ohne Netzbetrieb auskommen zu kommen, ist eine Batterie mit einer Kapazität von ca. 50 Ah erforderlich, deren Mitführung aufwendig ist.

Einer erwünscht hohen Dynamik des Steuerventils, die für eine Erzeugung gut nachweisbarer "harter" Schallimpulse günstig wäre, ist abträglich, dass relativ große Wassermengen aus den Arbeitsräumen des Anschlagzylinders alternierend abgeführt - verdrängt - werden müssen, da eine zur Förderung der Leichtgängigkeit des Ventilkolbens hingenommene Erhöhung der Leckrate wegen der damit einhergehenden Vergrößerung der fließenden Wassermenge die Dynamik des Ventils wieder beeinträchtigt.

Ein Schwingungserreger bei dem ein als Erregermasse dienender Kolben in einem zylinder hin- und herbewegt wird, ist aus DE 198 13 852 bekannt.

Aufgabe der Erfindung ist es daher, einen Schallgenerator der eingangs genannten Art dahingehend zu verbessern, dass bei gleichwohl einfachem Aufbau des Schallgenerators sowohl eine signifikante Erhöhung der Dynamik seines Steuerventils und damit auch des Anschlagzylinders als auch eine deutliche Reduzierung des Verbrauches an elektrischer Steuerenergie erzielt wird.

Diese Aufgabe wird erfindungsgemäß durch die kennzeichnenden Merkmale des Patentanspruchs 1 gelöst.

Hiernach ist zur Steuerung der Druckbeaufschlagung und -entlastung des Antriebsdruckraumes des Anschlagzylinders ein mit dem Systemdruck - hydraulisch oder pneumatisch - betätigbares Hauptsteuerventil vorgesehen, das als elektrisch vorgesteuertes Umschaltventil betrieben wird, wodurch es möglich ist, mit einer relativ geringen elektrischen Steuerleistung vergleichsweise große, durch hydraulische oder pneumatische Drücke entfaltbare Schaltkräfte zu erzeugen, die zu einem raschen Ansprechen des schallerzeugenden Anschlagzylinders führen; des weiteren wird der Anschlagkolben durch eine vorgespannte Rückstellfeder, die diesen zunächst in einer definierten Grundstellung hält, bei einer Einkopplung des Systemdruckes in den Antriebsdruckraum des Anschlagzylinders in seine eine Endstellung gedrängt, wodurch ein kurzer "harter" Schallimpuls durch das abrupte Stoppen des Flüssigkeitsstromes erzeugt wird, wobei nach einer Druckentlastung des Antriebsdruckraums der Anschlagkolben durch die Wirkung der Rückstellfeder wieder in seine Grundstellung zurück gelangt; dadurch, dass die Rückstellfeder des Anschlagzylinders in einem drucklos gehaltenen Ausgleichsraum angeordnet ist, aus dem ein aus dem Antriebsdruckraum übertretender Leckstrom ungehindert austreten kann, wird für den Fall, dass der Anschlagzylinder hydraulisch betrieben wird, auch ausgeschlossen, dass der Kolben gegen eine träge Wassermenge bewegt werden müsste, die die Dynamik der Kolbenbewegungen beeinträchtigen könnte.

Um den erfindungsgemäßen Schallgenerator längere Zeit, z.B. einen vollen Arbeitstag lang, ohne Netzanschluss betreiben zu können, genügt, verglichen mit dem bekannten Schallgenerator, eine Batterie mit signifikant geringerer Kapazität, wodurch das Arbeiten mit dem erfindungsgemäßen Schallgenerator erheblich erleichtert wird.

Das elektrisch vorgesteuerte Hauptsteuerventil kann - im Prinzip - als Sitzventil mit hermetisch absperrbaren Pfaden ausgebildet sein, das keinerlei Beitrag zu einer Leckage liefert, mit der Folge, dass der erfindungsgemäße Schallgenerator für vergleichsweise geringe Volumenströme ausgelegt werden kann und demgemäß auch in vergleichsweise geringer Baugröße realisierbar ist. Eine nennenswerte Leckage kann allenfalls im Anschlagzylinder auftreten, was jedoch für die Dynamik des Anschlagzylinders unkritisch ist, da leckagebedingt in den Ausgleichsraum übertretendes Arbeitsmedium praktisch ungehindert abfließen und die Rückkehr des Anschlagkolbens in seine Grundstellung nicht nennenswert beeinträchtigen kann.

Dies gilt auch dann, wenn, wie gemäß Anspruch 2 vorgesehen, die Rückstellfeder nur eine sehr geringe Rückstellkraft entfaltet und daher, wenn der Systemdruck in den Antriebsdruckraum des Anschlagzylinders eingekoppelt ist, die Rückstellfeder einer Beschleunigung des Anschlagkolbens in Richtung auf seine Anschlagposition keinen nennenswerten Widerstand entgegensetzt.

Gleichwohl kann es im Sinne einer Verkürzung der Messzeiten, insbesondere in Fällen, in denen die Untersuchungslängen der Leitungen relativ gering sind, auch zweckmäßig sein, wenn, wie gemäß Anspruch 3 vorgesehen, die Rückstellfeder auf den Systemdruck und den Kolbenhub des Anschlagzylinders dahingehend abgestimmt ist, dass der Mittelwert der Rückstellkraft der Feder etwa dem halben Wert der Kraft entspricht, die aus der Druckbeaufschlagung des Anschlagkolbens resultiert, so dass dieser jeweils mit etwa demselben Impuls auf die einander gegenüberliegend angeordneten gehäusefesten Anschlagstellen auftrifft.

In Kombination hiermit ist es besonders vorteilhaft, wenn die Vorspannung der Rückstellfeder einstellbar ist, damit eine bestmögliche Gleichheit der Impulse in beiden Endstellungen des Anschlagkolbens erreichbar ist.

Um den Impuls, der dem Anschlagkolben aufgeprägt werden kann, bedarfsweise variieren zu können, ist in bevorzugter Gestaltung des Anschlagzylinders vorgesehen, dass der Kolbenhub einstellbar ist, was z.B. mittels eines im drucklosen Bereich des Anschlagzylinders schraubbar geführten Anschlagelements auf einfache Weise möglich ist.

Eine bedarfsgerechte Variation der Auslegung der Rückstellfeder und des Hubes des Anschlagkolbens ist gemäß den Merkmalen des Anspruchs 6 auch in diskreten Schritten möglich.

Für den Fall, dass das druckgesteuerte Hauptsteuerventil die gemäß Anspruch 7 vorgesehene Gestaltung hat, sind durch die Merkmale der Ansprüche 8 bis 10 zweckmäßige Gestaltungen von Magnetventilen angegeben, mittels derer der Antriebsdruckraum des Anschlagzylinders bzw. die Steuerkammer des Hauptsteuerventils druckentlastbar sind.

Wenn das Hauptsteuerventil die gemäß Anspruch 11 vorgesehene Ausbildung hat, bei der es sowohl die Druckbeaufschlagung als auch die Druckentlastung des Antriebsdruckraumes des Anschlagzylinders steuert, ergibt sich ein besonders einfacher Aufbau des Schallgenerators insgesamt, wenn für die Vorsteuerventilanordnung die gemäß Anspruch 12 vorgesehene Gestaltung als Drei-/Zwei-Wege-Magnetventil realisiert ist.

Weitere Einzelheiten des erfindungsgemäßen Schallgenerators ergeben sich aus der nachfolgenden Beschreibung spezieller Ausführungsbeispiele anhand der Zeichnung. Es zeigen
- Fig.1: ein schematisch vereinfachtes elektrohydraulisches Schaltbild eines ersten Ausführungsbeispiels eines erfindungsgemäßen Schallgenerators mit einem Anschlagzylinder teilweise im Schnitt längs einer die zentrale Längsachse des Anschlagzylinders enthaltenen Längsmittelebene,
- Fig. 2: ein weiteres Ausführungsbeispiel in einer der Fig. 1 entsprechenden, vereinfachten Schaltbilddarstellung und
- Fig. 3: eine weitere Gestaltung eines bei Schallgeneratoren gemäß den Fig. 1 und 2 einsetzbaren Anschlagzylinders in einer entsprechenden Längsschnittdarstellung.

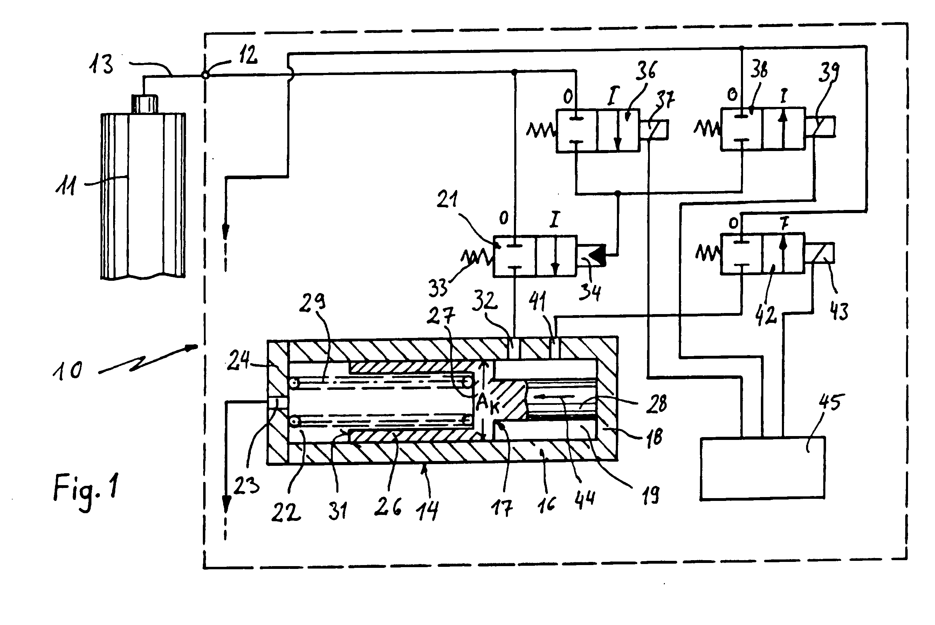

Zweck des in der Fig. 1 insgesamt mit 10 bezeichneten Schallgenerators ist die Erzeugung von Schallimpulsen, die in einem "unterirdischen" Leitungssystem eines Versorgungsnetzes, insbesondere eines Wasserversorgungsnetzes, ausbreitungsfähig sind und durch ihre Detektion mittels geeigneter Mikrophone - sogenannte Geophone - die Ermittelung des Verlaufes der Leitungsrohe ermöglichen.

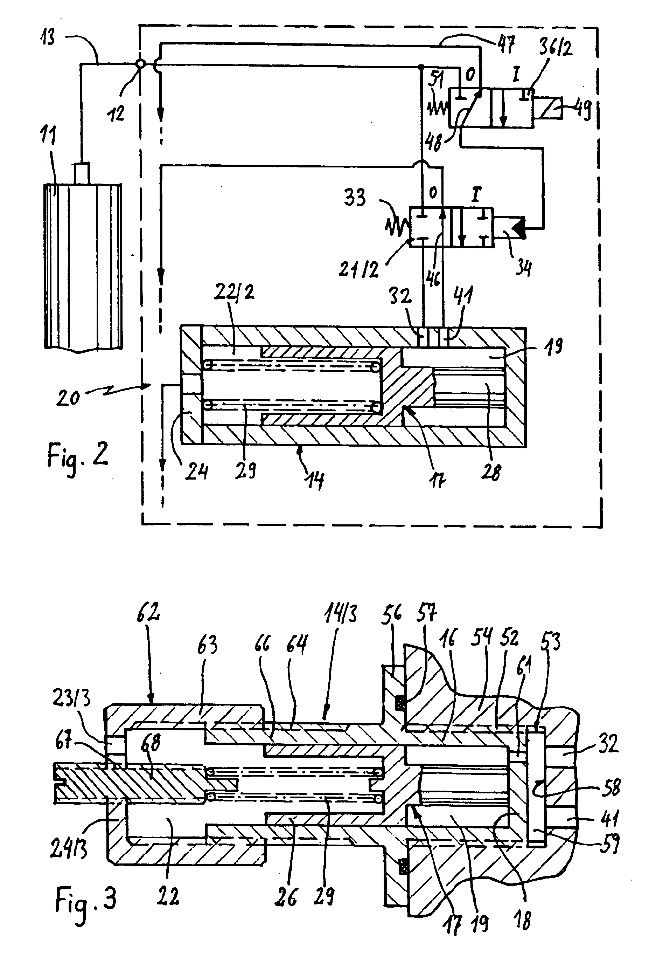

Das - nicht dargestellte - Wasserversorgungsnetz ist in den Fig. 1 und 2 lediglich durch einen Hydranten 11 repräsentiert, an den ein Eingangsanschluß 12 des Schallgenerators 10 über eine Anschlussleitung 13 angeschlossen und dadurch kommunizierend mit dem Rohrleitungssystem des Versorgungsnetzes verbunden ist.

Die Erzeugung der für die Leitungsortung nutzbaren Schallimpulse erfolgt nach dem Prinzip, dass zeitweise dem Schallgenerator aus dem Hydranten zugeleitete Wasserströme abrupt abgestoppt werden und die hierdurch erzeugten "Schock"-Schwingungen der Wassersäule und die daraus resultierenden Schallimpulse zur Leitungsortung genutzt werden.

Der Schallgenerator umfasst einen insgesamt mit 14 bezeichneten, in der Art eines einfach-wirkenden Hydrozylinders ausgebildeten Anschlagzylinder, der einen in einem der Grundform nach zylindrisch tropfförmigen Gehäuse 16 axial verschiebbar angeordneten Anschlagkolben 17 umfasst, der die axialbewegliche Begrenzung eines axial gehäusefest durch den Gehäuseboden 18 begrenzten Antriebsdruckraumes 19, in den über ein Hauptsteuerventil 21 der am Eingangsanschluß 12 herrschende Systemdruck einkoppelbar ist, gegenüber einem Ausgleichsraum 22 bildet, in den, wenn der Antriebsdruckraum unter dem relativ hohen Systemdruck von ca. 6 Bar steht, ein Wasser-Leckstrom überströmen kann und über eine Auslassöffnung 23, die beim dargestellten Ausführungsbeispiel zentral an einem Gehäusedeckel 24 angeordnet ist, ungehindert abströmen kann.

Der Anschlagkolben hat seinerseits die Grundform eines zylindrischen Topfes mit zu dem Gehäusedeckel 24 hinweisendem Topfmantel 26 und einem an der dem Mantel gegenüberliegenden Seite des Kolbenbodens 27 angeordneten zylindrisch stangenförmigen Anschlagfortsatz 28, durch dessen axiale Abstützung am Gehäuseboden 18 des Zylindergehäuses eine Anschlagstellung des Anschlagkolbens 17 markiert ist, in die dieser durch die Wirkung einer vorgespannten Rückstellfeder 29 gedrängt wird, die sich an der Innenseite des Gehäusedeckels 24 abstützt und an der Innenseite des Kolbenbodens 27 angreift und dadurch den Kolben 17 in seine Grundstellung drängt.

Gesehen in dieser Grundstellung des Anschlagkolbens 17, die minimalem Volumen des Antriebsdruckraumes 19 entspricht, ist die Rückstellfeder 29 auf dem größten Teil ihrer Länge von dem Anschlagkolben 17 aufgenommen, d. h. von seinem Topfmantel 26 umschlossen, wobei sich die ringförmige Endstirnfläche 31 in einem Abstand von der Innenseite des Gehäusedeckels 24 befindet, der dem maximalen Hub des Kolbens 17 entspricht, den der Kolben 17 bei einer Druck-Beaufschlagung des Antriebsdruckraumes 19 ausführen kann, bis durch Anlage dieser Endstirnfläche 31 an dem Gehäusedeckel 24 die Anschlagbegrenzung der Kolbenbewegung und die damit verknüpfte Auslösung eines Schallimpulses erfolgt.

Das zwischen den Eingangsanschluß 12 des Schallgenerators 10 und den Zulauf-Anschluß 32 des Antriebsdruckraumes 19 des Anschlagzylinders 14 geschaltete Hauptsteuerventil 21 ist beim dargestellten Ausführungsbeispiel gemäß Fig. 1 als 2/2-Wege-Umschaltventil ausgebildet, das durch eine Ventilfeder 33 in seine sperrende Grundstellung 0 und durch ventilgesteuerte Einkopplung des Systemdruckes in eine Steuerkammer 34 in seine Durchfluss-Steuerung I umschaltbar ist, in der der Eingangsanschluß 12 des Schallgenerators 10 mit dem Zulaufanschluß 32 an das Ende des Anschlagzylinders verbunden ist.

Zur Einkopplung des Steuerdruckes in die Steuerkammer 34 des Hauptsteuerventils 21 ist ein elektrisch ansteuerbares, als 2/2-Magnetventil ausgebildetes erstes Vorsteuerventil 36 vorgesehen, dessen - federzentrierte - Grundstellung die Sperrstellung 0 ist und dessen bei Erregung seines Steuermagneten 37 eingenommene Schaltstellung I die den Eingangsanschluß 12 des Schallgenerators mit der Steuerkammer 34 des Haupsteuerventils 21 verbindende Durchfluss-Stellung ist.

Zur Steuerung der Druckentlastung der Steuerkammer 34 des Hauptsteuerventils 21 ist ein zweites als 2/2-Wege-Magnetventil ausgebildetes Vorsteuerventil 38 vorgesehen, dessen federzentrierte Grundstellung wiederum seine Sperrstellung ist und dessen bei Erregung seines Steuermagneten 39 eingenommene Schallstellung seine Durchfluss-Stellung ist, in der die Steuerkammer 34 druckentlastet ist, so dass das Hauptsteuerventil 21 wieder in seine Grundstellung gelangt.

Analog zu dieser Art der Druckentlastung der Steuerkammer 34 des Hauptsteuerventils 21 ist zur Druckentlastung des Antriebsdruckraumes 19 des Anschlagzylinders 14 ein an dessen Rücklaufanschluß 41 angeschlossenes Entlastungs-Steuerventil 42 vorgesehen, das widerum als 2/2-Wege-Magnetventil mit federzentrierter sperrender Grundstellung 0 und den Abströmanschluß 41 des Anschlagzylinders freigebender Schaltstellung I ausgebildet ist.

Bei dem dargestellten Ausführungsbeispiel gemäß Fig. 1 sind das erste Vorsteuerventil 36, das zweite Vorstellventil 38 für die Ansteuerung des Hauptsteuerventils 21 sowie das Entlastungs-Steuerventil 42 als stromlos sperrende und bei Bestromung ihrer Steuermagnete offene Ventile ausgebildet, so dass sich im stromlosen Zustand der genannten Ventile deren in der Fig. 1 dargestellte Funktionsstellungs-Kombination ergibt, mit der auch die dargestellte Grund-Stellung des Anschlagkolbens 17 verknüpft sei, in der sich dessen stangenförmiger Anschlagfortsatz 28 am Gehäuseboden des Zylindergehäuses 16 abstützt.

Von dieser Konfiguration ausgehend wird der Schall-Erzeugungsbetrieb des Schallgenerators 10 durch elektrische Ansteuerung - Bestromung des Steuermagneten 37 - des ersten Vorsteuerventils 36 eingeleitet, wodurch der am Eingangsanschluß 12 anstehende Systemdruck in die Steuerkammer 34 des Hauptsteuerventils 21 eingekoppelt und dieses dadurch in seine Funktionsstellung I umgeschaltet wird, in der der Systemdruck über den Zulaufanschluß 32 in den Antriebsdruckraum 19 des Anschlagzylinders 14 eingekoppelt wird. Dadurch wird der Anschlagkolben 17 auf einer Fläche A_{K}, die der lichten Querschnittsfläche der Gehäusebohrung des Zylindergehäuses 16 entspricht, dem Systemdruck P_{S} ausgesetzt, so dass der Anschlagkolben 17 mit der Kraft F_{K} = A_{K} x P_{S} - gegen die Rückstellkraft der Rückstellfeder 29 in Richtung des Pfeils 44 verschoben wird, bis der Anschlagkolben 17 mit der ringförmigen Endstirnfläche 31 seines Topfmantels 26 an den Gehäusedeckel 24 anschlägt. Dadurch kommt der vom Eingangsanschluß 12 in den Antriebsdruckraum 19 eintretende Wasserstrom abrupt zum Stillstand, mit der Folge, dass in der Anschlussleitung der Hydranten 11 und über diese in dem angeschlossenen Versorgungsleitungssystem schockartig eine Schallanregung erfolgt, die mit geeigneten Schallsensoren - Geophonen - nachweisbar und entweder durch abhören oder durch elektronische Verarbeitung der Sensor-Ausgangssignale analysierbar ist, wodurch der Verlauf der Leitungsrohre erfassbar ist. Nach dem Anschlagen des Anschlagkolbens 17 an den Gehäusedeckel 24 wird das erste Vorsteuerventil 36 wieder in seine sperrende Grundstellung zurückgeschaltet und gleichzeitig hiermit oder geringfügig verzögert hiergegen das zweite Vorsteuerventil 38 in seine Durchfluss-Stellung I umgeschaltet, so dass die Steuerkammer 34 des Hauptsteuerventils 21 druckentlastet wird und das Hauptsteuerventil 21 in seine sperrende Grundstellung 0 zurückgelangt. Nachdem das Hauptsteuerventil 21 wieder sperrend geworden ist, wird das Entlastungs-Steuerventil 42 in seine Durchfluss-Stellung I gesteuert, so dass sich nunmehr der zuvor in den Antriebsdruckraum 19 eingekoppelte Systemdruck über das Entlastungs-Steuerventil 42 entspannen und der Anschlagkolben 17 unter der Wirkung der Rückstellfeder 29 wieder in seine minimalem Volumen des Antriebsdruckraums 19 entsprechende Ausgangsstellung zurück gelangt. Hiernach wird das Ausgleichs-Steuerventil 42 wieder in seine sperrende Grundstellung 0 zurückgeschaltet, wonach wieder die in der Fig. 1 dargestellte Funktionsstellungs-Kombination der Funktionselemente des Schallgenerators 10 erreicht ist.

Eine automatische Wiederholung solcher Schallimpuls-Erzeugungs-Zyklen ist mittels eines schematisch angedeuteten elektronischen Steuergerätes 45 auf einfache Weise steuerbar. Ein solches Steuergerät ist zweckmäßigerweise auf verschiedene Zykluszeiten, Anzahl von SchallimpulsErzeugungszyklen, sowie Folge und Dauer der Zeitspannen, während derer die einzelnen Steuerventile 36, 38 und 42 angesteuert werden, variabel programmierbar.

Der in der Fig. 2, auf deren Einzelheiten nunmehr verwiesen sei, insgesamt mit 20 bezeichnete Schallgenerator ist zu dem Schallgenerator 10 gemäß Fig. 1 weitestgehend funktionsanalog und unterscheidet sich von diesem lediglich durch die Gestaltung seines Hauptsteuerventils 21/2 und seines - einzigen - elektrisch ansteuerbaren Vorsteuerventils 36/2; für den Anschlagzylinder 17 des Schallgenerators 20 sei, der Einfachheit der Erläuterung halber, dieselbe Ausbildung vorausgesetzt wie beim Ausführungsbeispiel gemäß Fig. 1, sodaß dessen Beschreibung insoweit auch für die Beschreibung des Ausführungsbeispiels gem. Fig. 2 gilt. Auch soweit im übrigen in der Fig. 2 dieselben Bezugszeichen verwendet sind wie in Fig. 1 soll dies den Verweis auf die anhand der Fig. 1 gegebene Beschreibung beinhalten.

Das Hauptsteuerventil 21/2 des Schallgenerators 20 gemäß Fig. 2 ist als 4/2-Wege-Ventil ausgebildet, das im druckentlasteten Zustand seiner Steuerkammer 34 durch die Wirkung der vorgespannten Ventilfeder 33 in seine Grundstellung 0 geschaltet ist, in welcher der Zulaufanschluß 32 des Antriebsdruckraumes 19 gegen den Eingangsanschluß 12 des Schallgenerators 20 abgesperrt ist und der Rücklaufanschluß 41 des Antriebsdruckraumes 19 über einen Entlastungspfad 46 des druckgesteuerten Hauptsteuerventils 21/2 mit einer Abflussleitung 47 verbunden ist, über die Versorgungsmedium - Wasser - aus dem Antriebsdruckraum 19 des Anschlagzylinders 17 abfließen kann.

Das Hauptsteuerventil 21/2 nimmt seine dargestellte Grundstellung ein, wenn auch das Vorsteuerventil 36/2 seine - federzentrierte - Grundstellung 0 einnimmt, in welcher die Steuerkammer 34 des Hauptsteuerventils 21/2 über einen Entlastungspfad 48 mit der Abflussleitung 47 verbunden ist, wogegen der Eingangsanschluß 12 des Schallgenerators 20 gegen die Steuerkammer 34 des Hauptsteuerventils 21/2 abgesperrt ist.

Durch Erregung des Steuermagneten 49 des Vorsteuerventils 36/2 gelangt dieses ins gegen die Wirkung seiner Ventilfeder 51 in die Schaltstellung I, in welcher nunmehr der Eingangsanschluß 12, an dem der Systemdruck P_{S} ansteht, mit dem Zulaufanschluß 32 des Antriebsdruckraumes 19 des Anschlagzylinders 17 kommunizierend verbunden, dessen Rücklaufanschluß 41 jedoch gegen die Abflussleitung 47 abgesperrt ist, sodaß das Hauptsteuerventil 21/2 in seiner Schaltstellung I verharrt, während sich der Kolben 17 auf den Gehäusedeckel 24 zubewegt und darüber hinaus in dieser Position gehalten wird, bis das Vorsteuerventil 36/2 wieder in seine Grundstellung 0 zurückgeschaltet wird.

Bei dem Schallgenerator 20 sind in dem Vorsteuerventil 36/2 gleichsam die Funktionen der beiden Vorsteuerventile 36 und 38 des Schallgenerators 10 gemäß Fig. 1 vereinigt, während durch das Hauptsteuerventil 21/2 die Funktion des Hauptsteuerventils 21 und diejenige des Vorsteuerventils 42 des Schallgenerators 10 gemäß Fig. 1 implementiert sind. Eine zur Steuerung des Schallgenerators 20 gemäß Fig. 2 geeignete elektronische Steuereinheit ist auf besonders einfache Weise realisierbar, da im Prinzip eine einzige Steuer-Impulsfolge, deren Impulsfrequenz und deren Tastverhältnis einstellbar sind, zur Ansteuerung des Schallgenerators 20 genügt.

Zur Erläuterung weiterer Varianten von Schallgeneratoren 10 oder 20, wie anhand der Fig. 1 und 2 erläutert, sei nunmehr auf die Fig. 3 Bezug genommen.

Der insgesamt mit 14/3 bezeichnete Anschlagzylinder ist nach Aufbau und Funktion dem Anschlagszylinder 14 gemäß den Fig. 1 und 2 weitestgehend analog, so dass die Erläuterung auch seine gegenüber dem Anschlagzylinder 17 unterschiedlichen bzw. zusätzlichen baulichen und funktionellen Eigenschaften beschränkt werden kann. So weit Elemente des Anschlagzylinders 14/3 mit denselben Bezugszeichen belegt sind, wie auch in den Fig. 1 und 2 verwendet, soll dies wiederum den ergänzenden Verweis auf die diesbezüglichen Beschreibungsteile beinhalten.

Der Anschlagzylinder 14/3 gemäß Fig. 3 ist in eine mit einem Gewinde 52 versehene Sackbohrung eines zur Aufnahme auch von Ventilen vorgesehenen, lediglich schematisch angedeuteten Gehäuses 54 in der Art einer Patrone einschraubbar, die einen Dichtflansch 56 mit einer Ringdichtung 57 hat, die einen dichten Anschluss des Anschlagzylinders an das Gehäuse 54 vermitteln. Innerhalb der Sackbohrung 53 ist durch den Boden 18 des den Anschlagkolben 17 aufnehmenden Gehäuseteils 16 und den Boden 58 der Sackbohrung 53 axial ein Anschlussraum 59 begrenzt, in den der Zulaufanschluss 32 und der Rücklaufanschluss 41 des Anschlagzylinders 14/3 münden, dessen Antriebsdruckraum 19 mit dem Anschlussraum 59 über einen am Gehäuseboden 18 des einschraubbaren Zylindergehäuses 16 vorgesehenen Ansteuerkanal 61 in kommunizierender Verbindung steht.

Der die Rückstellfeder 29 aufnehmende Ausgleichsraum 22 ist mittels einer insgesamt mit 62 bezeichneten Überwurfmutter abgeschlossen, die in ihrer Deckelplatte 24/3 mit der außeraxial angeordneten Ausgleichsöffnugn 23/3 versehen ist. Die Überwurfmutter 62 hat einen relativ langgestreckten zylindrischen Mantel 63, dessen Innengewinde mit einem Außengewinde 64 des den topfförmigen Teil 26 des Anschlagkolbens 17 aufnehmenden Gehäuseteils 66 in kämmendem Eingriff steht. Die miteinander kämmenden Gewinde sind so aufeinander abgestimmt, dass die Überwurfmutter 62 durch Verdrehen hinreichend weit axial gegenüber dem Gehäuseteil 66 des Anschlagzylinders 17 verschiebbar ist, dass der Weg, den der Anschlagkolben 17 zwischen seiner Grundstellung und seiner Anschlagstellung am Boden 24/3 der Hutmutter 62 ausführt signifikant veränderbar ist, wodurch sich eine Vorgabe der Geschwindigkeit erreichen lässt, mit der der Anschlagkolben 17 am Deckelbereich 24/3 der Hutmutter 62 anschlägt. In einer zentralen Gewindebohrung 67 des Deckelteils 24/3 der Hutmutter 62 ist eine Stellschraube 68 schraubbar geführt und dadurch auch axial verschiebbar, an der innerhalb der Hutmutter die Rückstellfeder 29 axial abgestützt ist, die sich auch an dem gegenüberliegenden Bodenteil des topfförmigen Anschlagzylinderteils 26 abstützt. Durch Verdrehen der Stellschraube 68 ist, unabhängig von der Position der Hutmutter 62, eine definierte Vorspannung der Rückstellfeder 29 einstellbar, z.B. derart, dass auch beim Zurückschieben des Anschlagkolbens 17 in seine - dargestellte - Grundstellung eine "hörbare" Schlagwirkung erzielbar ist.

Schallgeneratoren, wie anhand der Fig. 1 bis 3 erläutert, sind durch Auswechseln von Schlagzylinderpatronen und/oder Veränderung des möglichen Kolbenhubs und/oder Einstellung der Vorspannung der Rückstellfeder 29 auf verschiedene erwünschte Betriebsbedingungen einstellbar. In einer typischen Auslegung werden für die Schallimpuls-Erzeugung Wiederholungsfrequenzen im Hz-Bereich, z.B. zwischen 0,5 Hz und 2 Hz gewählt.

## Patentansprüche

1. Schallgenerator (10; 20) zur Erzeugung von in Rohrleitungen eines unter einem Systemdruck stehenden Wasserversorgungssystems ausbreitungsfähigen Schallimpulsen, durch deren Detektion der Verlauf der Rohrleitungen ermittelbar ist, mit einem Kolben (17), der in einer Gehäusebohrung eines Zylinders (14; 22) eine axial bewegliche Abgrenzung eines Antriebsdruckraumes (19) bildet, durch dessen ventilgesteuerte alternierende Druckbeaufschlagung mit dem Systemdruck und Druckentlastung der Kolben zur Erzeugung der Schallimpulse hin und her verschiebbar ist, wobei zur Steuerung der Druckbeaufschlagung und -entlastung des Antriebsdruckraumes (19) ein mit dem hydraulischen Systemdruck betätigbares Hauptsteuerventil (21; 21/2) vorgesehen ist, das als vorgesteuertes Umschaltventil betrieben wird, wobei weiter ein an dem Kolben (17) angreifendes, am Gehäuse (16) des Zylinders (14; 14/3) abgestütztes, vorgespanntes Rückstellelement vorgesehen ist, gegen dessen Rückstellkraft der Kolben (17) bei Einkopplung des Systemdruckes in den Antriebsdruckraum in Richtung auf eine erste Endstellung gedrängt wird, und durch deren Wirkung der Kolben bei Druckentlastung des Antriebsdruckraumes wieder in Richtung auf seine andere Endstellung - die Grundstellung -zurückgeschoben wird, **dadurch gekennzeichnet, dass** der Zylinder (14; 22) als Anschlagzylinder ausgebildet ist, dessen Kolben (17) ein Anschlagkolben ist, dessen Endstellungen durch Anschlagwirkung mit einem Gehäuseboden (18) und einem Gehäusedeckel (24) des Zylindergehäuses markiert sind, dass das Rückstellelement als vorgespannte Rückstellfeder (29) ausgebildet ist, die in einem drucklos gehaltenen Ausgleichsraum (22) des Anschlagzylinders (14; 22) angeordnet ist, aus dem ein aus dem Antriebsdruckraum (19) übertretender Leckstrom ungehindert abfließen kann, und dass das zur Ansteuerung des Hauptsteuerventils (21) vorgesehene Vorsteuerventil als elektrisch ansteuerbares Magnetventil (36, 38; 36/2) ausgebildet ist, das durch Ausgangssignale eines elektronischen Steuergeräts (45) ansteuerbar ist, das im Hinblick auf Zykluszeiten, sowie die Anzahl von Schallimpulserzeugungszyklen variabel programmierbar ist.

2. Schallgenerator nach Anspruch 1, **dadurch gekennzeichnet, dass** die Rückstellfeder (29) dahingehend ausgelegt ist, dass ihre maximale Rückstellkraft signifikant kleiner ist als die Kraft, die auf den Kolben (17) des Anschlagzylinders (14; 14/3) unter dem in den Antriebsdruckraum (19) eingekoppelten Systemdruck wirksam ist.

3. Schallgenerator nach Anspruch 1 oder Anspruch 2, **dadurch gekennzeichnet, dass** die Vorspannung der Rückstellfeder (29) einstellbar ist, vorzugsweise durch Verdrehen einer Stellschraube (68), die mit einem gehäusefesten Gewinde (67) in kämmendem Eingriff steht.

4. Schallgenerator nach einem der Ansprüche 1 bis 3, **dadurch gekennzeichnet, dass** der Hub des Anschlagzylinderkolbens (17) einstellbar ist.

5. Schallgenerator nach einem der Ansprüche 1 bis 4, **dadurch gekennzeichnet, dass** der Schallgenerator mit verschiedenen, nach dem Kolbenhub und/oder hinsichtlich der Auslegung der Rückstellfeder (29) unterschiedlichen Anschlagzylindern betreibbar ist, die jeweils dieselbe Steueranschluß-Konfiguration haben, die ihrerseits auf die Anschlussanordnung des Schallgenerators (10; 20) abgestimmt ist.

6. Schallgenerator nach einem der Ansprüche 1 bis 5, **dadurch gekennzeichnet, dass** das Hauptsteuerventil (21) als 2/2-Wege-Ventil mit sperrender Grundstellung und offener Schaltstellung ausgebildet ist, dessen Umschaltung durch Druck-Beaufschlagung einer Steuerkammer (34) mit dem Systemdruck bzw. Druckentlastung derselben erfolgt.

7. Schallgenerator nach Anspruch 6, **dadurch gekennzeichnet, dass** zur Steuerung der Druckentlastung des Antriebsdruckraumes (19) des Anschlagzylinders (14; 14/3) ein Magnet-Ventil (42) vorgesehen ist, in dessen Grundstellung der Antriebsdruckraum (19) gegen den Entlastungspfad abgesperrt ist und in dessen Schaltstellung der Entlastungspfad freigegeben ist.

8. Schallgenerator nach Anspruch 7, **dadurch gekennzeichnet, dass** das Magnetventil als 2/2-Wege-Ventil ausgebildet ist.

9. Schallgenerator nach Anspruch 7 oder Anspruch 8, **dadurch gekennzeichnet, dass** ein zur Entlastungs-Steuerung der Steuerkammer (34) des Hauptsteuerventils vorgesehenes Magnetventil als 2/2-Wege-Ventil mit sperrender Grundstellung und offener Schaltstellung ausgebildet ist.

10. Schallgenerator nach einem der Ansprüche 1 bis 9, **dadurch gekennzeichnet, dass** das Hauptsteuerventil (21/2) als 4/2-Wege-Ventil ausgebildet ist, in dessen mit Druckentlastung seiner Steuerkammer (34) verknüpfter Grundstellung, der Antriebsdruckraum (19) gegen das Systemdruck führende Leitungssystem abgesperrt und druckentlastet ist, und in dessen Schaltstellung (I) der Systemdruck in den Antriebsdruckraum (19) des Anschlagzylinders (14; 14/3) eingekoppelt und dieser gegen einen Ausgleichs-Strömungspfad abgesperrt ist.

11. Schallgenerator nach einem der Ansprüche 1 bis 10, **dadurch gekennzeichnet, dass** zur Ansteuerung des Hauptsteuerventils (21; 21/2) ein 3/2-Wege-Magnetventil (36/2) vorgesehen ist, in dessen Grundstellung (0) der Antriebsdruckraum gegen das Systemdruck führende Leitungssystem abgesperrt und druckentlastet ist, und in dessen Schaltstellung (I) der Systemdruck in den Antriebsdruckraum (19) des Anschlagzylinders (14; 14/3) eingekoppelt und dieser gegen einen Ausgleichsströmungspfad abgesperrt ist.

## Claims

1. A sonic generator (10; 20) for generating sonic pulses that can propagate along pipelines of a water supply system subject to system pressure, by the detection of which sonic pulses the layout of the pipelines can be established, having a piston (17), which forms, in a bore in the housing of a cylinder, (14; 22), an axially moveable boundary of a driving pressure chamber (19), by means of the valve-controlled, alternating subjection of which to system pressure and pressure relief, the piston can be displaced back and forth to generate the sonic pulses, wherein provided to control the pressurisation and pressure relief of the driving pressure chamber (19) is a main control valve (21; 21/2), which can be actuated by the hydraulic system pressure and is operated as a pilot-operated switching valve, wherein a prestressed restoring element is further provided, which acts upon the piston (17) and is supported on the housing (16) of the cylinder (14; 14/3), against the restoring force of which restoring element the piston (17) is forced, on application of the system pressure, into the driving pressure chamber in the direction of a first end position, and through the action of which the piston is pushed back again, on pressure relief of the driving pressure chamber, in the direction of its other end position - the normal position, **characterised in that** the cylinder (14; 22) takes the form of a stop cylinder, the piston (17) of which is a stop piston, the end positions of which are marked by a stop effect with a housing base (18) and a housing cover (24) of the cylinder housing, that the restoring element takes the form of a prestressed restoring spring (29), which is disposed in an equalisation chamber (22) of the stop cylinder (14; 22), which equalisation chamber is kept unpressurised and from which a leakage flow overspilling from the driving pressure chamber (19) can flow away unimpeded, and that the pilot valve provided for activation of the main control valve (21) takes the form of an electrically-activated solenoid valve (36, 38; 36/2), which can be activated by means of output signals from an electronic control device (45), which is variably programmable in terms of cycle times and of the number of sonic-pulse generation cycles.

2. A sonic generator according to claim 1, **characterised in that** the restoring spring (29) is designed to the effect that its maximum restoring force is significantly smaller than the force effective on the piston (17) of the stop cylinder (14; 14/3) subject to the system pressure introduced into the driving pressure chamber (19).

3. A sonic generator according to claim 1 or claim 2, **characterised in that** the prestressing of the restoring spring (29) is adjustable, preferably by turning an adjusting screw (68), which is in meshing engagement with a housing-secured screw thread (67).

4. A sonic generator according to any one of claims 1 to 3, **characterised in that** the stroke of the stop-cylinder piston (17) is adjustable.

5. A sonic generator according to any one of claims 1 to 4, **characterised in that** the sonic generator can be operated with various stop cylinders differing in respect of the piston stroke and/or the design of the restoring spring (29), each of these stop cylinders having the same configuration of control connections, which is in turn matched to the terminal configuration of the sonic generator (10; 20).

6. A sonic generator according to any one of claims 1 to 5, **characterised in that** the main control valve (21) takes the form of a 2/2-way valve with a blocking normal position and an open switching position, the switch-over of which takes place by means of the pressurisation of a control chamber (34) with the system pressure and the pressure relief thereof.

7. A sonic generator according to claim 6, **characterised in that**, in order to control the pressure relief of the driving pressure chamber (19) of the stop cylinder (14; 14/3), a solenoid valve (42) is provided, in the normal position of which the driving pressure chamber (19) is blocked off from the relief path, and in the switching position of which the relief path is unblocked.

8. A sonic generator according to claim 7, **characterised in that** the solenoid valve takes the form of a 2/2-way valve.

9. A sonic generator according to claim 7 or claim 8, **characterised in that** a solenoid valve provided for the relief-control of the control chamber (34) of the main control valve takes the form of a 2/2-way valve with a blocking normal position and an open switching position.

10. A sonic generator according to any one of claims 1 to 9, **characterised in that** the main control valve (21/2) takes the form of a 4/2-way valve, in the normal position of which, associated with the pressure relief of its control chamber (34), the driving pressure chamber (19) is blocked off from the pipeline system carrying the system pressure and pressure-relieved, and in the switching position (I) of which the system pressure is applied to the driving pressure chamber (19) of the stop cylinder (14; 14/3) and the stop cylinder is blocked off from an equalisation flow path.

11. A sonic generator according to any one of claims 1 to 10, **characterised in that**, for the activation of the main control valve (21; 21/2), a 3/2-way solenoid valve (36/2) is provided, in the normal position (0) of which the driving pressure chamber is blocked off from the pipeline system carrying the system pressure and pressure-relieved, and in the switching position (I) of which the system pressure is applied to the driving pressure chamber (19) of the stop cylinder (14; 14/3) and the stop cylinder is blocked off from an equalisation flow path.

## Revendications

1. Générateur de sons (10 ; 20) servant à produire des impulsions acoustiques pouvant se propager dans des canalisations d'un système de distribution d'eau sous une pression système, dont la détection permet de déterminer le tracé des canalisations, avec un piston (17) qui délimite, de façon mobile dans le sens axial, une chambre de pression d'entraînement (19) dans un alésage de boîtier d'un cylindre (14 ; 22), dont la mise sous pression avec la pression système et la décompression en alternance commandée par une soupape permet de déplacer alternativement le piston pour générer les impulsions acoustiques, une soupape de commande principale (21 ; 21/2) pouvant être actionnée par la pression système hydraulique et fonctionnant comme une soupape de commutation pilotée étant prévue pour commander la mise sous pression et la décompression de la chambre de pression d'entraînement (19), un élément de rappel précontraint, agissant sur le piston (17), prenant appui sur le boîtier (16) du cylindre (14 ; 14/3) étant prévu en outre, contre la force de rappel duquel le piston (17) est poussé en direction d'une première position extrême lorsque la pression système est introduite dans la chambre de pression d'entraînement et sous l'effet duquel le piston est repoussé en direction de son autre position extrême, sa position initiale ou de base, lors de la décompression de la chambre de pression d'entraînement, **caractérisé par le fait que** le cylindre (14 ; 22) est réalisé sous la forme d'un cylindre à butée dont le piston (7) est un piston de butée dont les positions extrêmes sont marquées par effet de butée avec un fond de boîtier (18) et un couvercle de boîtier (24) du boîtier de cylindre, que l'élément de rappel est réalisé sous la forme d'un ressort de rappel (29) précontraint qui est disposé dans une chambre de compensation (22) du cylindre à butée (14 ; 22) maintenue sans pression, de laquelle un écoulement de fuite débordant de la chambre de pression d'entraînement (19) peut sortir librement, et que la soupape pilote prévue pour la commande de la soupape de commande principale (21) est réalisée sous la forme d'une électrovanne à commande électrique (36, 38 ; 36/2) qui peut être commandée par des signaux de sortie d'un appareil de commande électronique (45) qui est programmable de manière variable en ce qui concerne les temps de cycle ainsi que le nombre de cycles de génération d'impulsions acoustiques.

2. Générateur de sons selon la revendication 1, **caractérisé par le fait que** le ressort de rappel (29) est dimensionné de telle manière que sa force de rappel maximale est significativement plus petite que la force qui agit sur le piston (17) du cylindre à butée (14 ; 14/3) sous la pression système introduite dans la chambre de pression d'entraînement (19).

3. Générateur de sons selon la revendication 1 ou 2, **caractérisé par le fait que** la précontrainte du ressort de rappel (29) est réglable, de préférence par rotation d'une vis de réglage (68) qui engrène avec un filetage (67) lié au boîtier.

4. Générateur de sons selon l'une des revendications 1 à 3, **caractérisé par le fait que** la course du piston de cylindre à butée (17) est réglable.

5. Générateur de sons selon l'une des revendications 1 à 4, **caractérisé par le fait que** le générateur de sons peut fonctionner avec des cylindres à butée différents en ce qui concerne la course du piston et/ou le dimensionnement du ressort de rappel (29), qui ont chaque fois la même configuration de raccordement de commande, elle-même adaptée à la disposition de raccordement du générateur de sons (10 ; 20).

6. Générateur de sons selon l'une des revendications 1 à 5, **caractérisé par le fait que** la soupape de commande principale (21) est réalisée sous la forme d'une soupape à 2/2 voies avec position initiale de blocage et position de commutation ouverte, dont la commutation est réalisée par mise sous pression d'une chambre de commande (34) avec la pression système ou décompression de ladite chambre de commande (34).

7. Générateur de sons selon la revendication 6, **caractérisé par le fait qu'**il est prévu pour la commande de la décompression de la chambre de pression d'entraînement (19) du cylindre à butée (14 ; 14/3) une électrovanne (42) dans la position initiale de laquelle la chambre de pression d'entraînement (19) est fermée par rapport à la voie de décharge et dans la position de commutation de laquelle la voie de décharge est ouverte.

8. Générateur de sons selon la revendication 7, **caractérisé par le fait que** l'électrovanne est réalisée sous la forme d'une soupape à 2/2 voies.

9. Générateur de sons selon la revendication 7 ou la revendication 8, **caractérisé par le fait qu'**une électrovanne prévue pour la commande de décharge de la chambre de commande (34) de la soupape de commande principale est réalisée sous la forme d'une soupape à 2/2 voies avec position initiale de blocage et position de commutation ouverte.

10. Générateur de sons selon l'une des revendications 1 à 9, **caractérisé par le fait que** la soupape de commande principale (21/2) est réalisée sous la forme d'une soupape à 4/2 voies dans la position initiale de laquelle, associée à la décompression de sa chambre de commande (34), la chambre de pression d'entraînement (19) est fermée par rapport au système de conduites conduisant la pression système et décompressée, et dans la position de commutation (I) de laquelle la pression système est introduite dans la chambre de pression d'entraînement (19) du cylindre à butée (14 ; 14/3) et celle-ci est fermée par rapport à une voie d'écoulement de compensation.

11. Générateur de sons selon l'une des revendications 1 à 10, **caractérisé par le fait qu'**il est prévu pour la commande de la soupape de commande principale (21 ; 21/2) une électrovanne à 3/2 voies dans la position initiale (0) de laquelle la chambre de pression d'entraînement est fermée par rapport au système de conduites conduisant la pression système et décompressée, et dans la position de commutation (I) de laquelle la pression système est introduite dans la chambre de pression d'entraînement (19) du cylindre à butée (14 ; 14/3) et celle-ci est fermée par rapport à une voie d'écoulement de compensation.
